# EUROPEAN PATENT SPECIFICATION

(11) **EP 2 617 552 B1**
(45) Date of publication and mention of the grant of the patent: **30.11.2016**
(21) Application number: 12180932.1
(22) Date of filing: 17.08.2012
(51) Int. Cl.: B29C 65/34, F16L 47/03

(54) **Electrofusion fitting**
Elektroschweißmuffe
Raccord pour électrofusion

(30) Priority: 07.09.2011 GB 201115443
(43) Date of publication of application: 24.07.2013
(73) Proprietor: Radius Systems Limited, Alfreton, Derbyshire DE55 2JJ (GB)
(72) Inventor: Christodoulou, Mario John, Mansfield, Nottinghamshire NG18 4HL (GB)
(74) Representative: Stainthorpe, Vanessa Juliet

(56) References cited:
- EP-A1- 2 017 065
- DE-A1- 4 437 407
- JP-A- H06 300 177

## Description

This invention relates to the field of electrofusion fittings. Such fittings are employed to connect together plastics pipelines. They come in many kinds, from simple, inline couplers for two pipes to be joined end-to-end, to more complex fittings such as tapping tees to connect a branch service pipe to a mains pipe.

### BACKGROUND

Generally, electrofusion fittings comprise one or more tubular openings adapted to receive a pipe to be connected to the fitting. The tubular opening has an electrofusion element embedded in the internal surface of the opening that lies against the pipe when the pipe is inserted in the fitting. The electrofusion element frequently comprises a coil of resistance wire. The coil generally begins well inside the mouth of the opening and ends before the end of the fully-inserted pipe. Usually a rib or the like forms a stop in the opening, determining when the pipe is fully inserted once its end abuts the stop. This ensures that the element is fully covered on both sides, by the pipe, on the one hand, and by the fitting on the other. When the electrofusion element is energised, the plastics material of the pipe and fitting adjacent the electrofusion element (in the "fusion zone") melts and fuses. Both the pipe and the fitting are sufficiently thick, and being made of plastics material which is a poor conductor of heat, so that the liquefied plastics does not penetrate out through the fitting, or in through the wall of the pipe. Moreover, because there is overlap of fitting at one end of the coil and pipe at the other, the melting does not penetrate to the end of the fitting or to the end of the pipe. A "cold zone" on either side of (and axially adjacent to) the fusion zone ensures the melting is contained. Moreover, the plastics expands somewhat on melting, so that there is an increase in pressure in the fusion zone that aids fusion. An aperture is sometimes provided in the fitting communicating with the bore thereof in the region of the coil, so that melted plastics is exuded through the aperture to indicate melting and probable completion of the weld.

When joints are made, they are not always successful. A successful joint is one where the fitting and pipe are fused in a ring around the fluid passage of the pipe, and over a considerable length of the pipe so that a leakage or fracture path, if one develops, has to penetrate a long distance. This applies both to a tubular fitting and to a saddle fitting. There can be a number of reasons why a joint is not successful, and sometimes the fact that it is unsuccessful is not immediately apparent. Of course, mating surfaces of the fitting and pipe in the region of the electrofusion element have to be clean and "unskinned" (that is, having no oxide layer formed on the surface), otherwise proper fusion, which involves surface mixing between the two parts, may be inhibited. Also, the mating surfaces must lie close to one another over the entire fusion range, otherwise they may be too far apart for the liquefied plastics to meet over a long length of the complete circumference of the joint. Finally, there should be no relative movement between the pipe and fitting during the fusion process. If movement occurs, this can lead to the pipe not covering the fusion zone and thus weakening the joint.

Measures already exist to overcome these problems. For example, it is normal to scrape pipes to remove oxide layers, or provide them with a plastics surface skin that is peeled off prior to fusion to expose virgin plastics material. The present invention is not concerned with this aspect, however. It is also known to clamp pipes and fittings together prior to fusion, so that the possibility of movement is avoided. Improved clamping arrangements where angular or axial misalignment between a pipeline and fitting is minimised are known.

A known clamping arrangement is described in US52528180, in which conventional screws are received in slots to clamp a fitting to a pipe.

Given that movements of the pipe at critical times, or occasions when the pipe is not sufficiently central, are rare, pipe failures are also rare. However, this means that users in the field tend to be complacent about employing the provided clamping arrangements before effecting fusion and may short-cut or avoid using such clamping arrangements altogether. Improved fittings in which it is necessary to engage a clamping arrangement before fusion can take place are disclosed in WO2009/010800 and EP2017065, for example.

One issue is that a clamping ring or grip ring such as that disclosed in WO2009/010800 adds to the total axial length of the fitting on which it is employed. Although a change in the maximum available length of pipe which can be inserted into the fitting ("insertion length") should not affect the connection of a pipe, there are consequences when connecting shouldered spigot fittings designed for use with standard sockets. It is desirable to have a clamping arrangement which can be used with all standard sockets.

DE 4437407A1 discloses a welding collar having four extending "clamping straps" separated circumferentially by slots. A clamping ring is cammable against a ramped outer surface of the straps.

JP H06300177 discloses a further known electric fusion coupling with pipe clamp.

### BRIEF SUMMARY OF THE DISCLOSURE

According to a first aspect of the invention there is provided a moulded electrofusion fitting for connection to a plastics pipeline or spigot, as defined in claim 1.

Preferably, the mentioned in claim1 clamping surface comprises: fingers on the end of the opening circumferentially spaced around the opening and separated by slots between them; and cam surfaces defined on the fingers.

Further preferably the mentioned in claim1 grip ring includes wedge elements adapted to fit said cam surfaces on the fingers.

Preferably, said grip ring is positionable axially on said hollow body so as to be capable of substantially preventing radial egress of melt during electrofusion. Using prior art fittings, positioning of the clamping feature in the cold zone would not be possible because of the risk of melted plastics exuding through the slots between the fingers.

The fitting comprises an upstanding boss, preferably a hollow cylinder, protruding radially from said grip ring wherein upon said rotation of said grip ring said terminal pin moves from being covered by said terminal pin cover to being received in said upstanding boss so as to allow access to said terminal pin for electrical connection thereto. Advantageously, throughout said rotation of the grip ring until the terminal pin is received in said upstanding boss, said terminal pin is inaccessible for electrical connection thereto.

Preferably, said grip ring is capable of engaging said clamping surface after rotation through 45 degrees. A progressive clamping action over a relatively large angular distance is desirable as it reduces the force required for a given degree of rotation of the clamp. For this reason, progressive clamping is particularly preferable in larger versions of the fitting.

Preferably, said electrofusion element terminates before a stop formed in the opening, which stop is adapted to limit insertion of the pipeline in the opening.

A circumferential flange may be formed around the fingers to retain said grip ring on the end thereof.

Preferably, the electrofusion element is formed in the internal surface over an axial length that at least 25% of the distance from the end of said opening to the stop. The requirements for minimum length of the fusion zone (i.e. the axial extent of the electrofusion element) and the maximum penetration depth of the socket (i.e. the distance from the end of the opening to the stop) are usually defined in industry standards, and typically depend on the size of the socket's diameter. In a particularly preferable embodiment, the electrofusion element is formed in the internal surface over an axial length of between 55% and 65% of the distance from the end of said opening to the stop.

Preferably, the distance from the end of the opening to the stop ("the depth of penetration") is up to 2.5 times the internal diameter of said opening and preferably between 0.5 and 2.5 times the internal diameter of said opening. In particular, in smaller fittings, the depth of penetration is preferably up to around 2.5 the internal diameter of the opening. When the internal diameter is around 63 mm, the depth of penetration is preferably equal to the internal diameter. When the internal diameter is around 500 mm, the depth of penetration is preferably 0.5 times the internal diameter or less.

According to a second aspect of the invention, there is provided an in-line coupler comprising a hollow body having a fitting according to any of the preceding paragraphs at each end thereof.

Other features of the invention are defined in the appended claims.

### BRIEF DESCRIPTION OF THE DRAWINGS

Embodiments of the invention are further described hereinafter, by way of example, with reference to the accompanying drawings, in which:
Figures 1A-1F are views of a grip ring for use in a fitting embodying one aspect of the present invention;
Figures 2A-2E are views of a fitting embodying one aspect of the present invention;
Figure 3 is a perspective view, drawn to a larger scale, showing detail of the clamping surfaces;
Figure 4 is a perspective view of the fitting of Figures 2A-2E, with the grip rings in a non-clamping position;
Figure 5 shows the fitting of Figure 4 with one grip ring removed and the other grip ring in a clamping position; and
Figure 6 is a cross sectional view of an electrofusion coupling indicating the hot zone and cold zones.

### DETAILED DESCRIPTION

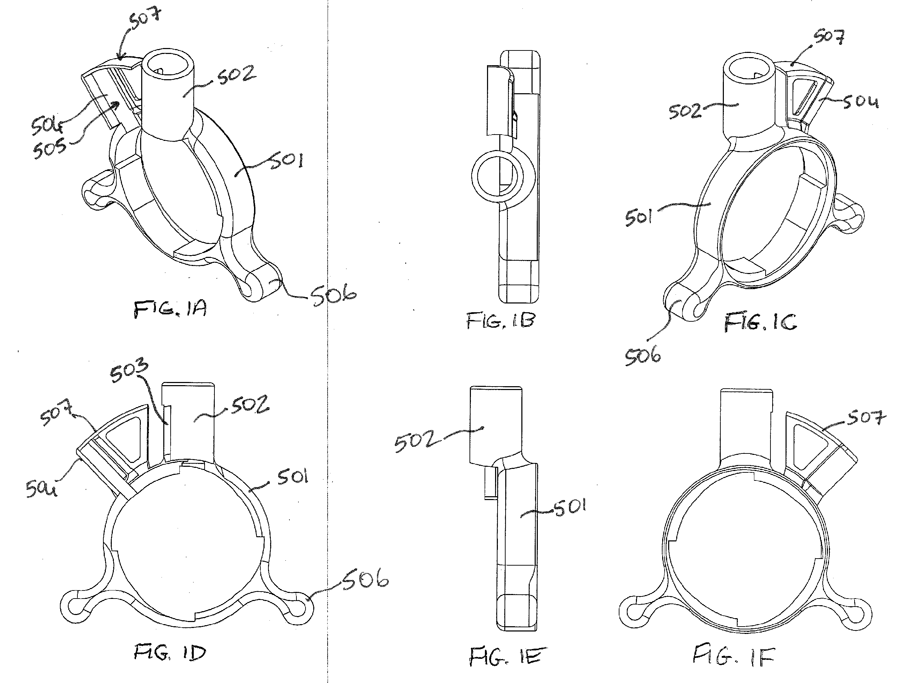

The fitting of the present invention is described and illustrated herein in use as part of an inline coupler. However, the fitting is equally useable on a tapping tee (for example of the type illustrated in Figure 1 of WO2009/010800), elbow, T-joint, or other types of fitting.

The description of WO2009/010800 provides useful background information to the present invention and some of the same reference numerals are used where possible.

In particular, WO2009/010800 sets out problems arising when the described grip ring assembly increases the overall length of a standard socket. Although a change in socket length does not affect the connection of a pipe, there are consequences when connecting shouldered spigot fittings designed for use with standard sockets, as shown in Figures 9a and b of WO2009/010800.

When a shouldered fitting is inserted into a standard (prior art) socket, a limit is reached when the shoulder abuts the opening of the socket (and/or when the end of the fitting abuts an insertion limiting rib of the socket). The shoulder of a shouldered fitting, (designed for use with a standard length socket), is distanced from the end of the fitting to allow enough length to enter the socket such that its end extends beyond the end of the electrofusion element. In the industry, the standard length now accepted for service pipe sizes is 41 mm for the depth of sockets and 42 mm for the length of spigots to be inserted in sockets.

However, when inserted into a socket provided with the grip ring 50 of WO2009/010800, the shoulder prevents the fitting entering the socket far enough to allow it to be surrounded by the entire electrofusion element. In such cases, only a poor electrofusion joint would be possible. For the grip ring to be used effectively with fittings that have been designed for use with standard sockets, the grip ring assembly must be added to the standard socket such that it does not increase its overall length.

One solution might be to translate the position of the grip ring, thereby reducing the distance between the finger ends and electrofusion element. However, this solution is limited by the obstruction caused by the terminal pin 24 and its upstanding boss 27. The terminal pin cannot be placed over the electrofusion coil without considerable manufacturing difficulty and the danger of shorting out the coil. The entire electrofusion element could be shortened, but this would reduce the effectiveness (i.e. its length) of the fused joint and is also limited by the industry specification.

Figures 10-16 of WO2009/010800 show various embodiments of fittings which seek to overcome this problem. However, these include components requiring manufacturing complexity (e.g. the bayonet, L-shaped or T-shaped slots of the respective grip rings) because of the need for the terminal pin to be located within the footprint of the grip ring.

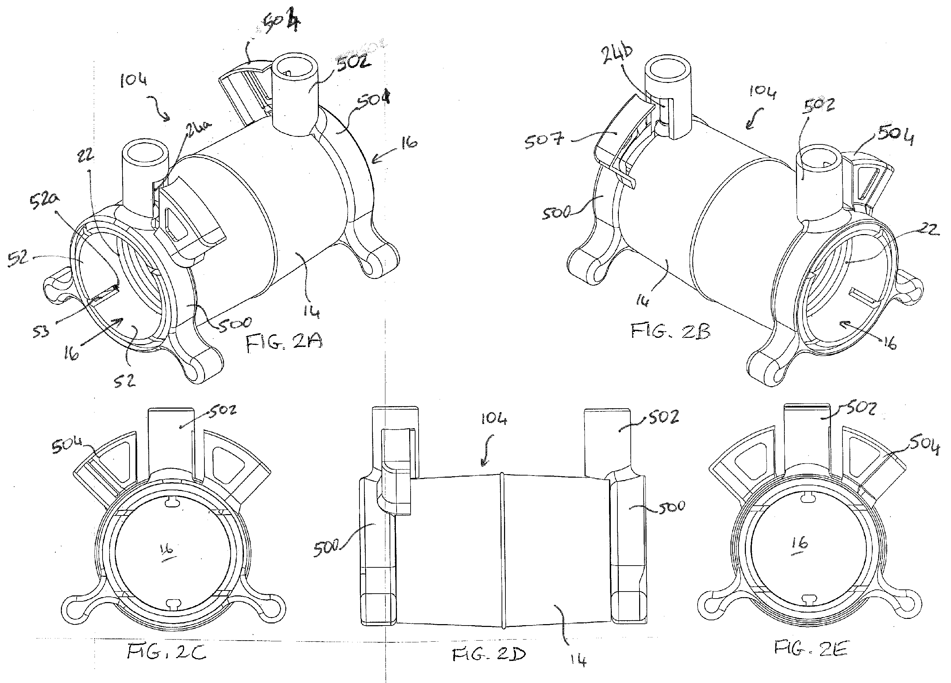

Turning now to the present invention and referring firstly to Figures 2A-2E, there is provided a fitting in the form of an inline coupler 104 having a hollow body 14 and a socket or tubular opening 16 at each end thereof. On the end of each socket 16 is provided a grip ring 500. The end of the socket is formed with a clamping surface comprising four fingers 52 separated from one another by slots 53. The clamping arrangement between cam surfaces defined on the fingers 52 and wedge elements on the grip ring 500 is generally as described in WO2009/010800.

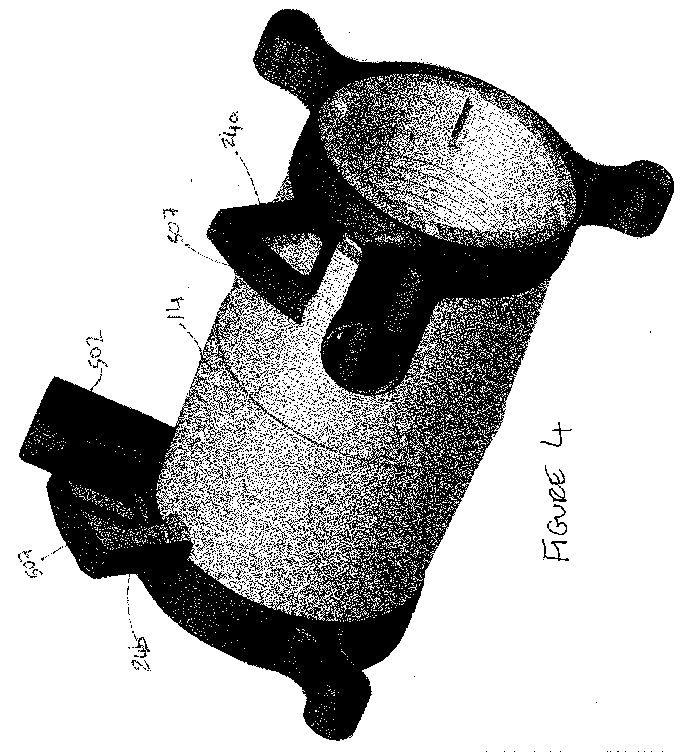

The inline coupler is for joining two pipes (not shown) end-to-end, although the principles discussed below apply to any coupler, such as an elbow, T-joint or even a tapping tee. The coupler 104 has two internal electrofusion elements 22 connected in series to each other and to two terminal pins 24a,b (pins shown in Figure 4). The terminal pins 24a,b project radially from the body 14. Grip rings 500 attach over fingers 52 at both ends of the inline coupler 104. Each grip ring 500 comprises an integral upstanding boss or shroud 502 and an integral upstanding terminal pin cover 504. The terms "boss" and "shroud" are used interchangeably in the following description but the boss/shroud and terminal pin cover each have different functions as will be described below.

Figures 1A - 1F show a grip ring 500 in more detail. The grip ring comprises an annular ring section 501 which has wedges on the interior surface thereof for engaging with cam surfaces defined on the fingers as described in WO2009/010800.

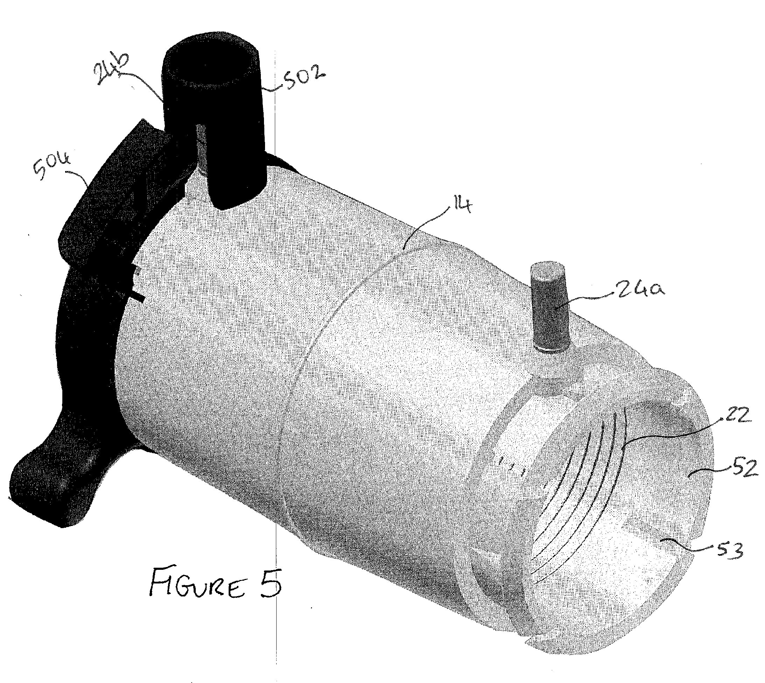

The integral upstanding boss or shroud 502 is cylindrical and suitably sized so that, when a terminal pin is generally centrally located therein (see Figure 5), there is sufficient clearance between the pin and the boss 502 to allow an electrical connector of standard type to be attached to the terminal pin.

The boss 502 has a slot 503 in a side thereof suitably sized to allow passage of a terminal pin therethrough upon rotation of the grip ring.

The grip ring further comprises an integral upstanding terminal pin cover 504. One side of the terminal pin cover 504 includes an opening large enough to receive a terminal pin moved laterally/axially therein. In the Figures, one whole side of the terminal pin cover 504 is open to form the opening 505. Opening 505 provides an axial path for the terminal pin when the grip ring 500 is assembled with the hollow body 14 including terminal pins.

Once the grip rings have been assembled with the hollow body, the ends of the pipes to be joined (not shown) can be inserted into the respective openings 16.

Each grip ring 500 is rotatable about the longitudinal axis of the body between two positions. Firstly, there is an "unclamped" position in which the terminal pin is located under the terminal pin cover 504 and in which the clamping surface does not grip a pipe or spigot placed within the opening 16. Secondly, there is a "clamped" position in which the terminal pin is located within the boss 502 and in which the clamping surface does grip a pipe or spigot placed within opening 16. Preferably the grip ring rotates through 45 degrees between the two positions and an endstop is provided to prevent further rotation (which would cause the fitting to unclamp again). Clockwise rotation of the grip ring (when looking through the open end of the coupler 104) has two simultaneous effects. The first is relative transverse movement of the terminal pin (underneath the terminal pin cover) until it passes through the slot 503 and into the boss 502. The second is that the cam surfaces and wedges engage compressing the fingers 52 against the pipe or spigot both securing and centralising it in the socket 104.

In a preferable embodiment, the grip ring 500 comprises lugs on an outer surface to facilitate manual rotation of the grip ring 500. In an alternative embodiment, the grip ring 500 is shaped to receive a tool, such as a C-Ring style spanner, for mechanically assisting rotation of the grip ring 500. In other embodiments, the grip ring 500 may not comprise any external features that are specifically for assisting rotation of the grip ring 500.

The grip ring is provided with axially protruding finger grips 506 to aid the user when rotating the grip ring. Other types of finger grips or grip-improving surfaces can be envisaged.

The uppermost surface 507 of the terminal pin cover provides a "roof" so that the terminal pin remains inaccessible throughout movement of the grip ring from the unclamped position to the clamped position. Only once the terminal pin has arrived in the boss, in the clamped position, is the pin accessible for electrical connection.

Therefore, in order to connect the power source, the user is required to rotate the grip ring 500 so that the terminal pin is centrally located within the boss 502. In this position, there is sufficient space between the terminal pin 24a/24b and the boss 502 to accommodate the connector from the electrical power source. The boss 502 is suitably sized and shaped to permit this, depending upon the expected type of electrical connector.

In requiring the user to rotate the grip ring before an electrical connection can be made, it is ensured that the user also engages the grip ring against the pipe or spigot to clamp it in place before electrofusion can be initiated.

The electrofusion elements 22 are composed of a conducting material that produces sufficient heat to melt fusible polymer material when an electrical current is passed through it, but does not itself melt or break. The terminal pins 24a, 24b are composed of a good electrically conducting material that does not produce significant heat when an electric current is passed through it.

In contrast with WO2009/010800, the fingers, particularly their proximal root ends 52a are axially positioned relatively close to the electrofusion element 22, in the cold zone of the electrofusion element. The proximal root ends 52a would typically be at least 1x, but no more than 3x the wire winding pitch of the electrofusion element from the last turn of wire of the electrofusion element, and in a preferred embodiment would be 1.5x to 2.5x the wire winding pitch. If the proximal root ends 52a are too close to the wire then melting of the support for the clamping fingers 52 may occur.

This is possible in the described embodiment because the longitudinal axis of each terminal pin is outside the footprint of the grip ring 500, being axially offset therefrom, but the pin can still interact with the terminal pin cover and upstanding boss to control access for electrical connection.

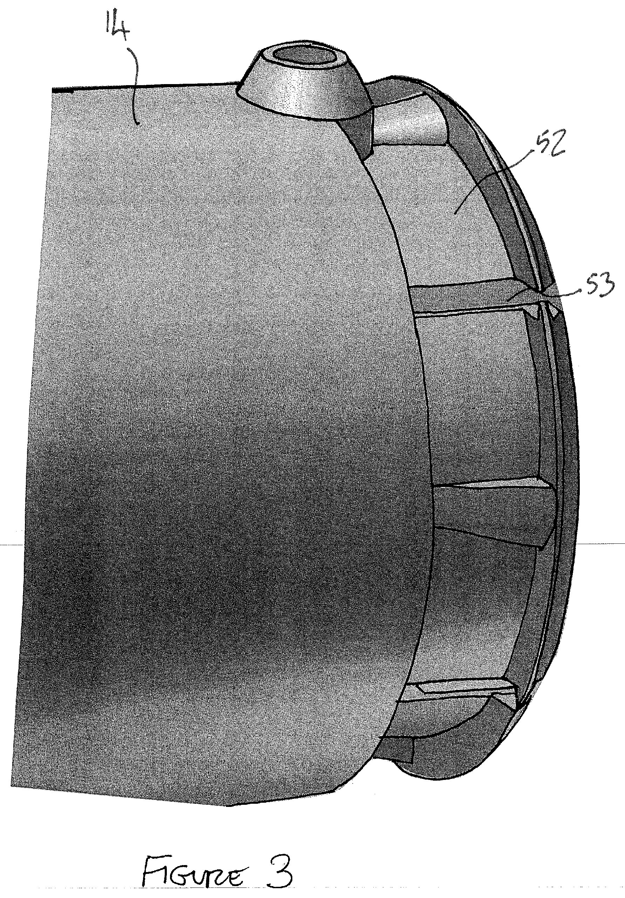

Although the inline couplers of Figures 1-5 have been illustrated in conjunction with the above-described grip ring (i.e. having wedges and cam surfaces), it will be appreciated that the arrangements described above could be used in any inline coupler where it is desired to prevent connection to the terminal pin prior to a predefined rotation of a grip ring. The actual grip ring or clamping arrangement used need not be identical to that described and illustrated in Figures 1-5.

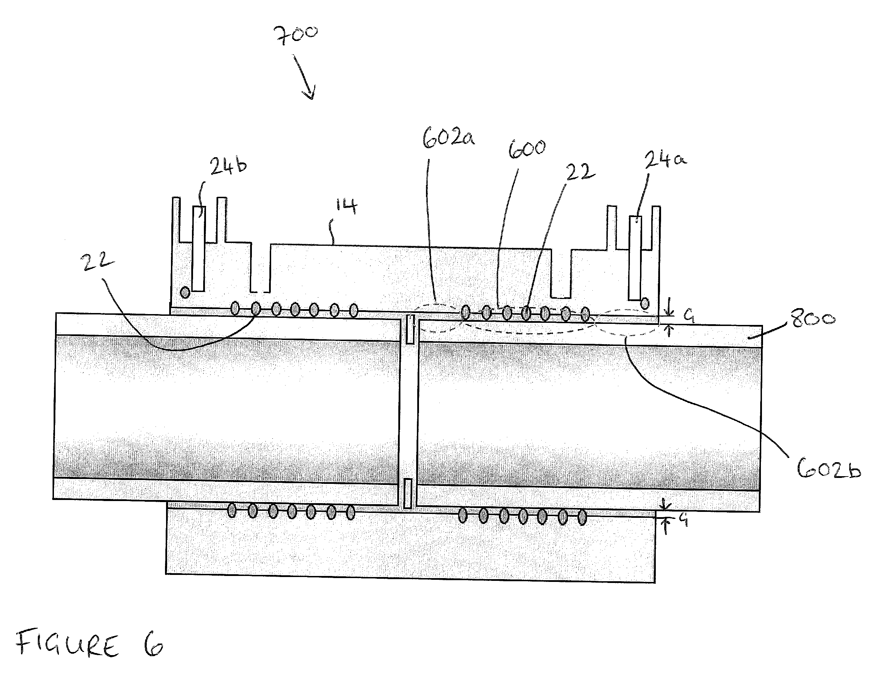

Throughout the description and claims of this specification, the words "cold zone" mean the region immediately adjacent the electrofusion element. Figure 6 shows the locations of the cold zones in relation to a generic electrofusion coupler 700. Each socket of the electrofusion coupler 700 comprises an electrofusion element 22 wound in an internal surface thereof. Each socket has three zones, namely an inner cold zone 602a, a central hot (or fusion) zone 600, and an outer cold zone 602b. The central hot zone 600 is the region around the electrofusion element 22 which is embedded into the internal surface of the coupler 700. When an electric current is supplied to the electrofusion element 22, it will become hot and melt the surrounding plastic. Away from the electrofusion element 22, the cold zones 602a,b are unheated and in these regions hot melt exudes from the hot, fusion zone 600 during electrofusion. Since the cold zones 602a,b are unheated, the hot melt "freezes off" once it exudes into the cold zones 602a,b, which generates a back pressure into the hot zone 600. The back pressure is required to fill a gap G between a pipe 800 inserted in the socket and the coupler 700, and thereafter to generate pressure to force a weld between the two components. The length of the outer cold zone 602b should be of sufficient length to cause freezing of the melt front before it exudes out of the coupling (under normal welding conditions).

Throughout the description and claims of this specification, the words "footprint of the grip ring" mean the area of the grip ring which overlaps with and is in close sliding contact with the outer surface of the hollow body of the fitting, namely the annular ring portion 501.

Throughout the description and claims of this specification, the singular encompasses the plural unless the context otherwise requires. In particular, where the indefinite article is used, the specification is to be understood as contemplating plurality as well as singularity, unless the context requires otherwise.

## Claims

1. A moulded electrofusion fitting (104) for connection to a plastics pipeline or spigot, comprising:
a hollow body (14) formed with a tubular opening (16) that has a longitudinal axis and is adapted to receive an end of the pipeline or spigot inserted in the direction of said axis as a close sliding fit against an internal surface of the opening;
an electrofusion element (22) formed in the internal surface in the opening (16);
at least one terminal pin (24a, 24b) protruding radially from said body and connected to an end of said electrofusion element; a terminal pin cover (504);
a clamping surface (52; 53) on the end of the tubular opening (16);
a grip ring (500) adapted to fit said clamping surface; and
an upstanding boss (502), preferably a hollow cylinder, protruding radially from said grip ring (500) wherein upon rotation of said grip ring said terminal pin (24a; 24b) moves from being covered by said terminal pin cover (504) to being received in said upstanding boss (502) so as to allow access to said terminal pin for electrical connection thereto;
wherein, when a pipeline or spigot is inserted in the opening and the grip ring (500) is rotated about said axis, said grip ring engages said clamping surface whereby said pipe is gripped by said clamping surface,
**characterised in that** said clamping surface is at least partially located in a cold zone (602b) adjacent said electrofusion element,
and **in that** the terminal pin cover (504) projects radially from said grip ring (500) and is adapted to at least partially cover said terminal pin (24a; 24b) to prevent connection of an electrical connector thereto,
wherein said rotation of the grip ring (500) moves said terminal pin cover (504) away from said terminal pin so as to allow access to said terminal pin for electrical connection thereto,
and **in that** a longitudinal axis of said terminal pin cover (504) is axially offset from a footprint of the grip ring (500).

2. A fitting according to claim 1 wherein said clamping surface comprises:
fingers (52) on the end of the opening circumferentially spaced around the opening and separated by slots (53) between them; and
cam surfaces defined on the fingers.

3. A fitting according to claim 2 wherein said grip ring (500) includes wedge elements adapted to fit said cam surfaces on the fingers.

4. A fitting according to any of the preceding claims, wherein said grip ring (500) is positionable axially on said hollow body so as to be capable of substantially preventing radial egress of melt during electrofusion.

5. A fitting according to claim any preceding claim wherein, throughout said rotation of the grip ring (500) until the terminal pin is received in said upstanding boss (502), said terminal pin is inaccessible for electrical connection thereto.

6. A fitting as claimed in any of the preceding claims wherein said grip ring (500) is capable of engaging said clamping surface (52; 53) after rotation through 45 degrees.

7. A fitting as claimed in any of the preceding claims wherein said electrofusion element (22) terminates before a stop formed in the opening, which stop is adapted to limit insertion of the pipeline in the opening.

8. A fitting according to claim 7, wherein the electrofusion element is formed in the internal surface over an axial length that at least 25% of the distance from the end of said opening to the stop.

9. A fitting according to claim 8, wherein the electrofusion element is formed in the internal surface over an axial length of between 55% and 65% of the distance from the end of said opening to the stop.

10. A fitting according to any of claims 7 to 9, wherein the distance from the end of the opening to the stop is up to 2.5 times the internal diameter of said opening and preferably between 0.5 and 2.5 times the internal diameter of said opening.

11. A fitting according to any of the preceding claims when dependent on claim 2, wherein a circumferential flange is formed around the fingers to retain said grip ring on the end thereof.

12. An inline coupler (104) comprising a hollow body having a fitting according to any of the preceding claims at each end thereof.

## Patentansprüche

1. Geformte Elektroschweißmuffe (104) zur Verbindung mit einer Kunststoffrohrleitung oder einem Zapfen, die Folgendes umfasst:
einen Hohlkörper (14), der mit einer rohrförmigen Öffnung (16) ausgebildet ist, eine Längsachse aufweist und derart ausgelegt ist, dass er ein Ende der Rohrleitung oder des Zapfens, das in Richtung der Achse eingesetzt wird, in engem Gleitsitz an einer Innenfläche der Öffnung aufnimmt;
ein Elektroschweißelement (22), das in der Innenfläche in der Öffnung (16) ausgebildet ist;
mindestens einen Anschlussstift (24a, 24b), der radial von dem Körper absteht und mit einem Ende des Elektroschweißelements verbunden ist;
eine Anschlussstiftabdeckung (504);
eine Klemmfläche (52; 53) am Ende der rohrförmigen Öffnung (16);
einen Greifring (500), der derart ausgelegt ist, dass er mit der Klemmfläche zusammenpasst; und
einen hochstehenden Vorsprung (502), vorzugsweise einen Hohlzylinder, der radial von dem Greifring (500) absteht, wobei sich bei Drehung des Greifrings der Anschlussstift (24a; 24b) von einer Bedeckung durch die Anschlussstiftabdeckung (504) in eine Aufnahme in dem hochstehenden Vorsprung (502) bewegt, um Zugang zu dem Anschlussstift zur elektrischen Verbindung damit zu ermöglichen;
wobei, wenn eine Rohrleitung oder ein Zapfen in die Öffnung eingesetzt und der Greifring (500) um die Achse gedreht wird, der Greifring die Klemmfläche in Eingriff nimmt, wodurch das Rohr von der Klemmfläche gegriffen wird,
**dadurch gekennzeichnet, dass** die Klemmfläche zumindest teilweise in einer kalten Zone (602b) angeordnet ist, die an das Elektroschweißelement angrenzt,
und dass die Anschlussstiftabdeckung (504) radial von dem Greifring (500) absteht und derart ausgelegt ist, dass sie den Anschlussstift (24a; 24b) zumindest teilweise abdeckt, um eine Verbindung eines elektrischen Verbinders damit zu verhindern,
wobei die Drehung des Greifrings (500) die Anschlussstiftabdeckung (504) so von dem Anschlussstift wegbewegt, dass dem Anschlussstift Zugang zur elektrischen Verbindung damit ermöglicht wird,
und dass eine Längsachse der Anschlussstiftabdeckung (504) zu einer Spur des Greifrings (500) axial versetzt ist.

2. Muffe nach Anspruch 1, wobei die Klemmfläche Folgendes umfasst:
Finger (52) am Ende der Öffnung, die umlaufend um die Öffnung beabstandet sind und dazwischen durch Schlitze (53) voneinander getrennt sind; und
Nockenflächen, die an den Fingern definiert sind.

3. Muffe nach Anspruch 2, wobei der Greifring (500) Keilelemente umfasst, die derart ausgelegt sind, dass sie mit den Nockenflächen an den Fingern zusammenpassen.

4. Muffe nach einem der vorangehenden Ansprüche, wobei der Greifring (500) axial auf dem Hohlkörper positionierbar ist, sodass er imstande ist, einen radialen Austritt von Schmelze während des Elektroschweißens im Wesentlichen zu verhindern.

5. Muffe nach einem der vorangehenden Ansprüche, wobei während der Drehung des Greifrings (500), bis der Anschlussstift in dem hochstehenden Vorsprung (502) aufgenommen ist, der Anschlussstift für eine elektrische Verbindung damit unzugänglich ist.

6. Muffe nach einem der vorangehenden Ansprüche, wobei der Greifring (500) imstande ist, die Klemmfläche (52; 53) nach Drehung um 45 Grad in Eingriff zu nehmen.

7. Muffe nach einem der vorangehenden Ansprüche, wobei das Elektroschweißelement (22) vor einem Anschlag endet, der in der Öffnung ausgebildet ist, wobei der Anschlag derart ausgelegt ist, dass er das Einführen der Rohrleitung in die Öffnung begrenzt.

8. Muffe nach Anspruch 7, wobei das Elektroschweißelement in der Innenfläche über eine axiale Länge von mindestens 25 % des Abstands vom Ende der Öffnung bis zum Anschlag ausgebildet ist.

9. Muffe nach Anspruch 8, wobei das Elektroschweißelement in der Innenfläche über eine axiale Länge von zwischen 55 % und 65 % des Abstands vom Ende der Öffnung bis zum Anschlag ausgebildet ist.

10. Muffe nach einem der Ansprüche 7 bis 9, wobei der Abstand vom Ende der Öffnung bis zum Anschlag bis zu 2,5-mal so groß ist wie der Innendurchmesser der Öffnung und vorzugsweise zwischen 0,5- und 2,5-mal so groß ist wie der Innendurchmesser der Öffnung.

11. Muffe nach einem der vorangehenden Ansprüche in Abhängigkeit von Anspruch 2, wobei ein Umfangsflansch um die Finger ausgebildet ist, um den Greifring an deren Ende zu halten.

12. Inline-Verbindungsstück (104), umfassend einen Hohlkörper, der eine Muffe nach einem der vorangehenden Ansprüche an jedem seiner Enden aufweist.

## Revendications

1. Raccord d'électrofusion moulé (104) pour le raccordement à une canalisation ou un embout mâle en matière plastique, comprenant :
un corps creux (14) formé avec une ouverture tubulaire (16) qui présente un axe longitudinal et est adapté pour recevoir une extrémité de la canalisation ou de l'embout mâle inséré dans la direction dudit axe comme un ajustement à glissement étroit contre une surface interne de l'ouverture ;
un élément d'électrofusion (22) formé dans la surface interne de l'ouverture (16) ;
au moins une broche de connexion (24a, 24b) faisant saillie radialement à partir dudit corps et connectée à une extrémité dudit élément d'électrofusion ; un couvercle de broche de connexion (504) ;
une surface de serrage (52; 53) sur l'extrémité de l'ouverture tubulaire (16) ;
une bague de préhension (500) adaptée pour saisir ladite surface de serrage ; et
un bossage vertical (502), de préférence un cylindre creux, faisant saillie radialement à partir de ladite bague de préhension (500), où lors de la rotation de ladite bague de préhension, ladite broche de connexion (24a; 24b) passe d'une position dans laquelle elle est recouverte par ledit couvercle de broche de connexion (504) à une position dans laquelle elle est reçue dans ledit bossage vertical (502) de manière à permettre l'accès à ladite broche de connexion pour assurer une connexion électrique à celle-ci ;
où, quand une canalisation ou un embout mâle sont insérés dans l'ouverture et la bague de préhension (500) est mise en rotation autour dudit axe, ladite bague de préhension vient en prise avec ladite surface de serrage de sorte que ledit tube est saisi par ladite surface de serrage,
**caractérisé en ce que** ladite surface de serrage est au moins partiellement située dans une zone froide (602b) adjacente dudit élément d'électrofusion,
et **en ce que** le couvercle de la broche de connexion (504) fait saillie radialement à partir de ladite bague de préhension (500) et est apte à recouvrir au moins partiellement ladite broche de connexion (24a, 24b) pour empêcher la connexion d'un connecteur électrique à celle-ci, dans lequel ladite rotation de la bague de préhension (500) écarte ledit couvercle de la broche de connexion (504) de ladite broche de connexion de manière à permettre l'accès à ladite broche de connexion pour une connexion électrique à celle-ci,
et **en ce qu'**un axe longitudinal dudit couvercle de connexion à broche (504) est axialement décalé par rapport à une empreinte de la bague de préhension (500).

2. Raccord selon la revendication 1, où ladite surface de serrage comprend :
des doigts (52) sur l'extrémité de l'ouverture espacés de manière circonférentielle autour de l'ouverture et séparés par des fentes (53) disposés entre eux ; et des surfaces de came définies sur les doigts.

3. Raccord selon la revendication 2, où ladite bague de préhension (500) comprend des éléments de coin adaptés pour poser lesdites surfaces de came sur les doigts.

4. Raccord selon l'une quelconque des revendications précédentes, où ladite bague de préhension (500) est positionnée axialement sur ledit corps creux de manière à pouvoir empêcher sensiblement la sortie de matière fondue radiale pendant l'électrofusion.

5. Raccord selon l'une quelconque des revendications précédentes, où pendant ladite rotation de la bague de préhension (500) jusqu'à la réception de la broche de connexion dans ledit bossage vertical (502), ladite broche de connexion est inaccessible pour permettre une connexion électrique à celle-ci.

6. Raccord selon l'une quelconque des revendications précédentes, où ladite bague de préhension (500) est capable d'engager ladite surface de serrage (52; 53) après rotation de 45 degrés.

7. Raccord selon l'une quelconque des revendications précédentes, où ledit élément d'électrofusion (22) se termine avant une butée formée dans l'ouverture, laquelle butée est adaptée pour limiter l'insertion de la canalisation dans l'ouverture.

8. Raccord selon la revendication 7, dans lequel l'élément d'électrofusion est formé dans la surface interne sur une longueur axiale d'au moins 25% de la distance depuis l'extrémité de ladite ouverture jusqu'à la butée.

9. Raccord selon la revendication 8, dans lequel l'élément d'électrofusion est formé dans la surface interne sur une longueur axiale comprise entre 55% et 65% de la distance depuis l'extrémité de ladite ouverture jusqu'à la butée.

10. Raccord selon l'une quelconque des revendications 7 à 9, où la distance entre l'extrémité de l'ouverture et la butée est jusqu'à 2,5 fois le diamètre intérieur de ladite ouverture, et de préférence entre 0,5 et 2,5 fois le diamètre intérieur de ladite ouverture.

11. Raccord selon l'une quelconque des revendications précédentes lorsqu'elles dépendent de la revendication 2, où une bride circonférentielle est formée autour des doigts pour retenir ladite bague de préhension sur l'extrémité de celle-ci.

12. Coupleur en ligne (104) comprenant un corps creux ayant un raccord selon l'une quelconque des revendications précédentes, à chaque extrémité de celui-ci.
